# EUROPEAN PATENT SPECIFICATION

(11) **EP 1 293 720 B1**
(45) Date of publication and mention of the grant of the patent: **11.01.2006**
(21) Application number: 02078913.7
(22) Date of filing: 17.09.2002
(51) Int. Cl.: F16L 55/11, F16L 55/115

(54) **Cover assembly for sealing openings in an outer pipe part and an inner pipe part**
Abdeckungsanordnung zum Abdichten von Öffnungen in einem äusseren und einem inneren Rohrteil
Ensemble couvercle pour l'étanchéité d'ouvertures dans une partie externe et interne d'un élément de tuyau

(30) Priority: 18.09.2001 NL 1018980
(43) Date of publication of application: 19.03.2003
(73) Proprietor: interActive bouwprodukten B.V., 6942 GT Didam (NL)
(72) Inventor: Noorlander, Hans Nicolaas, 6882 AX Velp (NL); Kistemaker, Albert-Jan, 7206 EV Zutphen (NL)
(74) Representative: Brookhuis, Hendrik Jan Arnold

(56) References cited:
- EP-A- 0 293 313
- EP-A- 0 379 189
- DE-U- 20 022 107
- FR-A- 2 411 354

## Description

The invention relates to an assembly of an inner cover and an outer cover for respectively sealing an opening in an inner pipe part and an opening in an outer pipe part, the inner pipe part being held coaxially in an outer pipe part, with a space between the inner pipe part and the outer pipe part, and the opening in the outer pipe part and the opening in the inner pipe part lying in line with one another, as seen in the radial direction.

A cover assembly of this type is known, for example for sealing inspection openings in a flue-gas discharge. The flue-gas discharge has an inner pipe, which serves as a flue-gas discharge duct from a combustion boiler, and an outer pipe which is used to supply combustion air to the combustion boiler. In the known assembly, the opening in the inner pipe part is closed off by an inner cover which is secured to the inner pipe by securing means, for example screws or bolts. The opening in the outer pipe makes it possible to reach the opening in the inner pipe and is separately closed off by an outer cover which is secured to the outer pipe.

When fitting the inner cover to the inner pipe part of the known assembly, a fitter has to work through the opening in the outer pipe part. His view and the space available to carry out the work is limited. This means that in the known assembly it is difficult to fit the inner cover and the securing means associated with the inner cover. The difficulty of installation can lead to the securing means dropping between the inner pipe part and the outer pipe part.

One object of the invention is to provide an improved structure which simplifies assembly.

This object is achieved by an assembly according to claim 1. Arranging the outer cover on the opening in the outer pipe part results in the outer cover being pressed onto the at least one projecting member of the inner and/or outer cover, with the result that the latter is pressed radially inwards onto the opening in the inner pipe part.

It is noted that EP-A1-0.379.189 discloses a maintenance cover with a maintenance opening and a maintenance lit for an insulated sheet metal duct wall. The maintenance lit has an inner lit and an outer lit, which can be drawn firmly against one another. The insulated sheet metal duct wall is hereby clamped between the inner lit and the outer lit, thus closing the maintenance opening.

In a further embodiment, the projecting member comprises a vertical wall which extends substantially perpendicular to that side of the cover which faces the outer pipe part, the vertical wall having a height which is such that the free edge of the vertical wall, in the mounted state, is at least partially touching the outer cover. Designing the projecting member as a vertical wall allows it to be used as a handle which makes it easier to fit the cover onto the opening or remove it.

In another embodiment, the inner cover and the outer cover are formed as a single unit. This enables the inner cover to be installed at the same time as the outer cover, with the advantage that fewer operations are required in order to seal the opening in the inner pipe and the opening in the outer pipe.

The invention also relates to an inner cover according to claim 4.

Furthermore, the invention relates to a pipe construction for discharging flue gas and supplying combustion air to a burner, comprising an assembly with an inner pipe part and an outer pipe part.

Further embodiments and advantages of the invention are explained below with reference to the drawing, in which:
Fig. 1 shows an inner pipe part and an outer pipe part provided with an assembly according to the invention, partially in side view and partially in cross section,
Fig. 2 shows a perspective view of an inner cover according to the invention,
Fig. 3 shows a front view of the inner cover from Fig. 2,
Fig. 4 shows a cross-sectional view on line A-A from Fig. 3, and
Fig. 5 shows a cross-sectional view on line B-B from Fig. 3.

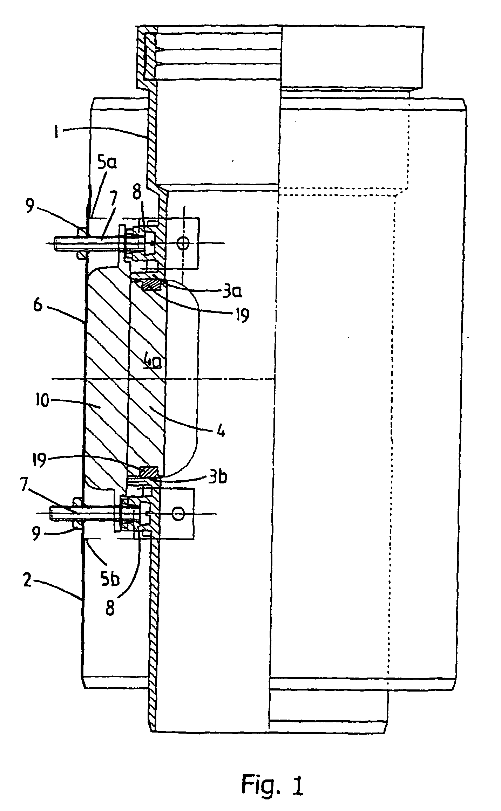

Figure 1 shows part of a pipe construction with a flue-gas discharge and combustion air supply for a burner, for example of a central heating system, having an inner pipe part 1 and an outer pipe part 2 which coaxially surrounds the latter. The flue-gas discharge is effected via the inner pipe part 1. The external diameter of the inner pipe part 1 is smaller than the internal diameter of the outer pipe part 2, so that there is a space between the two pipe parts 1 and 2, through which space combustion air is supplied to the burner (not shown).

In the embodiment of this example, the inner pipe part 1 is made from plastic and the outer pipe part 2 is made from metal, but it is also possible for the outer pipe part 2 to be made from plastic and the inner pipe part 1 to be made from metal, or for both pipe parts 1, 2 to be made from either plastic or metal.

In the inner pipe part 1 there is an opening, the upper edge and lower edge of which are denoted in Fig. 1 by 3a and 3b, respectively. The opening in the inner pipe part 1 is sealed by an inner cover 4.

In the outer pipe part 2 there is an opening, of which in Fig. 1 the upper edge and lower edge are denoted by 5a and 5b, respectively. The opening in the outer pipe part 2 is closed off by an outer cover 6. In the example shown, the outer cover 6 is designed as a curved plate which is complementary to the outer circumference of the outer pipe part 2 and can be positioned over the opening in the outer pipe part 2.

The opening in the inner pipe part 1 and the opening in the outer pipe part 2 lie at approximately the same height, as seen in the axial direction. As a result, therefore, these openings lie in line with one another in the radial direction.

In the example shown, bolts 7 are secured in the vicinity of the upper and lower edges 3a and 3b, in protuberances 8 arranged on the inner pipe part 1. The shank of the bolts 7 extends radially outwards, and the length of the shank is such that the free end of the shank is situated beyond the opening of the outer pipe part 2. A nut 9 can be fitted to the bolt 7 in order to secure the outer cover 6 over the opening in the outer pipe part 2.

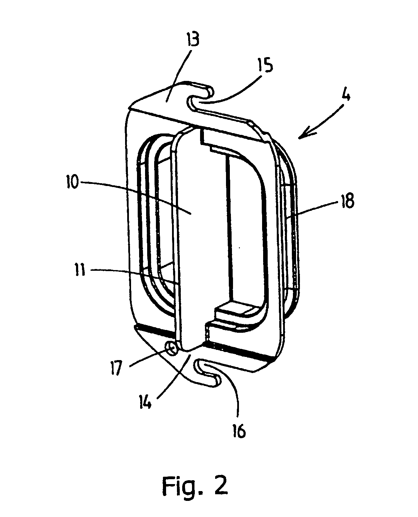

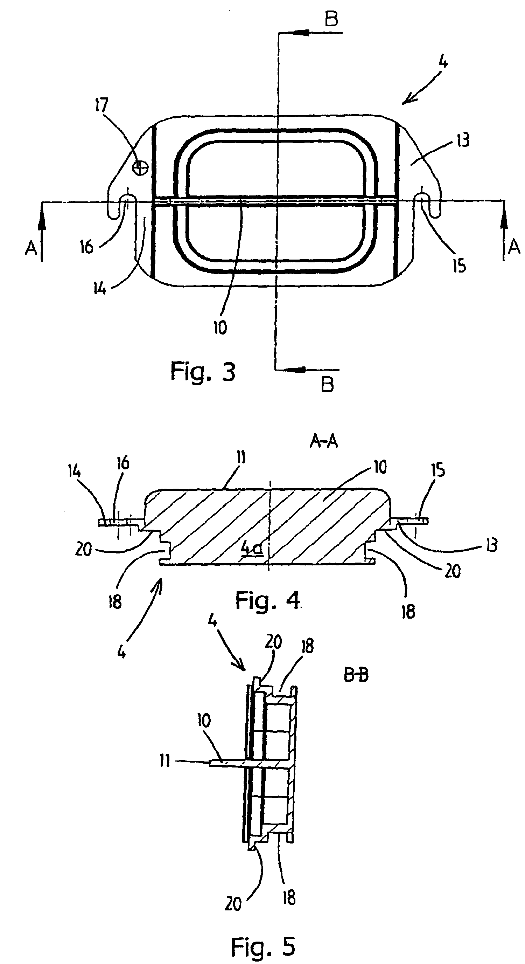

Figs. 2-5 show a preferred embodiment of an inner cover 4. The inner cover 4 is provided with a vertical wall 10 which, in use, extends substantially perpendicular to the side which faces the outer pipe part 2. As can be seen from Fig. 1, the vertical wall 10 has a height which is such that its free edge 11, in the mounted position, bears against the outer cover 6. As a result, therefore, the inner cover 4 is held in place with the aid of the outer cover 6 without having to use locking means between the inner cover 4 and the inner pipe part 1. The vertical wall 10 has the further advantage that it can be used as a handle during fitting and removal of the inner cover 4. This therefore makes the inner cover 4 easier to handle.

In the embodiment shown, the edge 11 bears completely against the outer cover 6. However, it is also possible for the vertical wall 10 to be formed in such a manner that its edge bears only partially against the outer cover 6. Within the context of the invention, it is also not necessary to fit a vertical wall 10, rather, it is also possible for a differently shaped member which projects from that side of the cover 4 which faces the outer pipe part 2 to be used.

In the embodiment shown, the inner cover 4 is provided with a lug 13 and a lug 14. There is a half-open hole 15 in the lug 13. There is a half-open hole 16 in the lug 14. The half-open holes 15 and 16 are used to receive the bolts 7. Furthermore, the lug 14 is provided with a hole 17 which is intended to enable the inner cover 4 to be secured to the inner pipe part 1 by means of a cord or the like in order to prevent the inner cover 4 from being lost, in particular in the space between the inner pipe part 1 and outer pipe part 2.

As can be seen from Fig. 1, the inner cover 4 is designed as a type of stopper. A section 4a of the inner cover 4 is held in the opening and surrounded by the edges of the opening. The inner cover 4 has an encircling bearing surface 20 which, in the mounted position of the inner cover 4, bears against the outer side of the upper and lower edges 3a and 3b, respectively, and the side edges (not shown) of the opening in the inner pipe part 1. Furthermore, a recess 18 which extends all the way around is arranged at the peripheral edge of the section 4a of the inner cover 4 which is held in the opening, in which recess a gasket 19 (cf. Fig. 1) can be held in order to obtain a good seal of the opening in the inner pipe part 1.

In the embodiment shown, the inner cover 4 is provided with a vertical wall 10. In an alternative which is not shown, the outer cover 6 is provided, on the side which faces the inner pipe part 1, with a vertical wall or the like, so that the inner cover 4 does not have to be provided with a vertical wall of this type. The vertical wall extends radially inwards from the inner side of the outer cover 6, so that by this means the inner cover 4 is held in place.

In the embodiment shown, the inner cover and outer cover are illustrated as separate components. However, an embodiment (not shown) in which the inner cover and the outer cover are designed as a single unit is also conceivable. This could be achieved, for example, by producing the assembly in such a manner that the edge 11 of the vertical wall 10 is fixedly connected to the outer cover 6.

## Claims

1. Assembly of an inner cover (4) and an outer cover (6) for respectively sealing an opening in an inner pipe part (1) and an opening in an outer pipe part (2), the inner pipe part (1) being held coaxially in the outer pipe part (2), with a space between the inner pipe part and the outer pipe part, and the opening in the outer pipe part and the opening in the inner pipe part lying in line with one another, as seen in the radial direction, **characterized in that** the outer cover (6), in a mounted position, is arranged on the opening in the outer pipe part (2) and in the process holds the inner cover (4) on the opening of the inner pipe part (1), wherein the inner cover (4) is provided, on the side which faces the outer pipe part (2), with at least one projecting member (10) which, in the mounted state, is at least partially touching the outer cover (6), and/or the outer cover (6) is provided, on the side which faces the inner pipe part (1), with at least one projecting member which, in the mounted state, is at least partially touching the inner cover (4).

2. Assembly according to claim 1, **characterized in that** the projecting member (10) comprises a vertical wall (10) which extends substantially perpendicular to that side of the inner cover (4) which faces the outer pipe part (2), the vertical wall (10) having a height which is such that the free edge (11) of the vertical wall (10), in the mounted state, is at least partially touching the outer cover (6).

3. Assembly according to claim 1, **characterized in that** the inner cover (4) and the outer cover (6) are designed as a single unit.

4. Inner cover (4) for sealing an opening in an inner pipe part (1), the inner pipe part (1) being held coaxially in an outer pipe part (2), with a space between the inner pipe part (1) and the outer pipe part (2), the outer pipe part (2) having an opening which lies in line with the opening in the inner pipe part (1), as seen in the radial direction, an outer cover (6), in a mounted state, being arranged on the opening in the outer pipe part (2) and, in this position, holding the inner cover (4) on the opening of the inner pipe part (1), **characterized in that** the inner cover (4) is provided, on the side which faces the outer pipe part (2) in the mounted state, with at least one projecting member (10) which, in the mounted position of the inner cover and the outer cover, is at least partially touching the outer cover (6).

5. Inner cover (4) according to claim 4, **characterized in that** the projecting member (10) comprises a vertical wall (10) which extends substantially perpendicular to that side of the inner cover (4) which, in the mounted position, faces the outer pipe part (2), the vertical wall (10) having a height which is such that the free edge (11) of the vertical wall (10), in the mounted position of the inner cover (4) and the outer cover (6), is at least partially touching the outer cover (6).

6. Pipe construction having an inner pipe part (1) and an outer pipe part (2) provided with an assembly according to one or more of claims 1-3.

7. Pipe construction according to claim 6 intended for discharging flue gas and supplying combustion air to a burner.

## Patentansprüche

1. Baugruppe aus einer inneren Abdeckung (4) und einer äußeren Abdeckung (6) zum Abdichten einer Öffnung in einem inneren Rohrteil (1) bzw. einer Öffnung in einem äußeren Rohrteil (2), wobei der innere Rohrteil (1) koaxial in dem äußeren Rohrteil (2) mit einem Zwischenraum zwischen dem inneren Rohrteil und dem äußeren Rohrteil gehalten wird und die Öffnung in dem äußeren Rohrteil sowie die Öffnung in dem inneren Rohrteil, in der radialen Richtung gesehen, miteinander fluchtend sind, **dadurch gekennzeichnet, dass** die äußere Abdeckung (6) in einer angebrachten Position an der Öffnung in dem äußeren Rohrteil (2) angeordnet ist und im Prozess die innere Abdeckung (4) an der Öffnung des inneren Rohrteils (1) hält, wobei die innere Abdeckung (4), an der Seite, die dem äußeren Rohrteil (2) zugewandt ist, mit wenigstens einem vorstehenden Element (10) versehen ist, das in dem angebrachten Zustand wenigstens teilweise die äußere Abdeckung (6) berührt, und/oder die äußere Abdeckung (6) an der Seite, die dem inneren Rohrteil (1) zugewandt ist, mit wenigstens einem vorstehenden Element versehen ist, das im angebrachten Zustand die innere Abdeckung (4) wenigstens teilweise berührt.

2. Baugruppe nach Anspruch 1, **dadurch gekennzeichnet, dass** das vorstehende Element (10) eine vertikale Wand (10) umfasst, die sich im Wesentlichen senkrecht zu der Seite der inneren Abdeckung (4) erstreckt, die dem äußeren Rohrteil (2) zugewandt ist, wobei die vertikale Wand (10) eine Höhe hat, die so ist, dass die freie Kante (11) der vertikalen Wand (10) im angebrachten Zustand die äußere Abdeckung (6) wenigstens teilweise berührt.

3. Anordnung nach Anspruch 1, **dadurch gekennzeichnet, dass** die innere Abdeckung (4) und die äußere Abdeckung (6) als eine Einheit ausgeführt sind.

4. Innere Abdeckung (4) zum Abdichten einer Öffnung in einem inneren Rohrteil (1), wobei der innere Rohrteil (1) koaxial in einem äußeren Rohrteil (2) mit einem Zwischenraum zwischen dem inneren Rohrteil (1) und dem äußeren Rohrteil (2) gehalten wird und der äußere Rohrteil eine Öffnung hat, die mit der Öffnung des inneren Rohrteils (1), in der radialen Richtung gesehen, fluchtend ist, eine äußere Abdeckung (6) in einem angebrachten Zustand an der Öffnung in dem äußeren Rohrteil (2) angeordnet ist und in dieser Position die innere Abdeckung (4) an der Öffnung des inneren Rohrteils (1) hält, **dadurch gekennzeichnet, dass** die innere Abdeckung (4) an der Seite, die in dem angebrachten Zustand dem äußeren Rohrteil (2) zugewandt ist, mit wenigstens einem vorstehenden Element (10) versehen ist, das in der angebrachten Position der inneren Abdeckung und der äußeren Abdeckung die äußere Abdeckung (6) wenigstens teilweise berührt.

5. Innere Abdeckung (4) nach Anspruch 4, **dadurch gekennzeichnet, dass** das vorstehende Element (10) eine vertikale Wand (10) umfasst, die sich im Wesentlichen senkrecht zu der Seite der inneren Abdeckung (4) erstreckt, die in der angebrachten Position dem äußeren Rohrteil (2) zugewandt ist, wobei die vertikale Wand (10) eine Höhe hat, die so ist, dass die freie Kante (11) der vertikalen Wand (10) in der angebrachten Position der inneren Abdeckung (4) und der äußeren Abdeckung (6) die äußere Abdeckung (6) wenigstens teilweise berührt.

6. Rohrkonstruktion mit einem inneren Rohrteil (1) und einem äußeren Rohrteil (2), die mit einer Anordnung nach einem oder mehreren der Ansprüche 1-3 versehen ist.

7. Rohrkonstruktion nach Anspruch 6, die zum Ableiten von Abgas und zum Zuführen von Verbrennungsluft zu einem Brenner bestimmt ist.

## Revendications

1. Ensemble d'un couvercle interne (4) et d'un couvercle externe (6) pour l'étanchéité respectivement d'une ouverture dans une partie constituée d'un tuyau interne (1) et d'une ouverture dans une partie constituée d'un tuyau externe (2), la partie constituée du tuyau interne (1) étant maintenue coaxialement dans la partie constituée du tuyau externe (2), avec un espace entre la partie constituée du tuyau interne et la partie constituée du tuyau externe, et l'ouverture dans la partie constituée du tuyau externe et l'ouverture dans la partie constituée du tuyau interne étant disposées mutuellement en ligne, ceci considéré en direction radiale, **caractérisé en ce que** le couvercle externe (6), en position montée, est disposé sur l'ouverture dans la partie constituée du tuyau externe (2) et ce faisant, maintient le couvercle interne (4) sur l'ouverture de la partie constituée du tuyau interne (1), où le couvercle interne (4) est muni, sur le côté faisant face à la partie constituée du tuyau externe (2), d'au moins un élément saillant (10) lequel, en position montée, touche au moins partiellement le couvercle externe (6), et/ou le couvercle externe (6) est muni, sur le côté faisant face à la partie constituée du tuyau interne (1), d'au moins un élément saillant lequel, en position montée, touche au moins partiellement le couvercle interne (4).

2. Ensemble selon la revendication 1, **caractérisé en ce que** l'élément saillant (10) comprend une paroi verticale (10) qui s'étend de manière substantiellement perpendiculaire à ce côté du couvercle interne (4) faisant face à la partie constituée du tuyau externe (2), la paroi verticale (10) ayant une hauteur telle que le côté libre (11) de la paroi verticale (10), en position montée, touche au moins partiellement le couvercle externe (6).

3. Ensemble selon la revendication 1, **caractérisé en ce que** le couvercle interne (4) et le couvercle externe (6) sont conçus comme un seul élément.

4. Couvercle interne (4) pour l'étanchéité d'une ouverture dans une partie constituée d'un tuyau interne (1), la partie de tuyau interne (1) étant maintenue coaxialement dans une partie constituée d'un tuyau externe (2), avec un espace entre la partie constituée de tuyau interne (1) et la partie constituée de tuyau externe (2), la partie constituée de tuyau externe (2) ayant une ouverture disposée en ligne avec l'ouverture dans la partie constituée de tuyau interne (1), ceci considéré en direction radiale, un couvercle externe (6), en position montée, étant disposé dans l'ouverture dans la partie constituée de tuyau externe (2) et, dans cette position, maintenant le couvercle interne (4) dans l'ouverture de la partie constituée de tuyau interne (1), **caractérisé en ce que** le couvercle interne (4) est muni, sur le côté faisant face à la partie constituée de tuyau externe (2) en position montée, d'au moins un élément saillant (10) lequel, en position montée du couvercle interne et du couvercle externe, touche au moins partiellement le couvercle externe (6).

5. Couvercle interne (4) selon la revendication 4, **caractérisé en ce que** l'élément saillant (10) comprend une paroi verticale (10) qui s'étend de manière substantiellement perpendiculaire à ce côté du couvercle interne (4) qui, en position montée, fait face à la partie constituée de tuyau externe (2), la paroi verticale (10) ayant une hauteur telle que le côté libre (11) de la paroi verticale (10), en position montée du couvercle interne (4) et du couvercle externe (6), touche au moins partiellement le couvercle externe (6).

6. Structure d'un tuyau ayant une partie constituée de tuyau interne (1) et une partie constituée de tuyau externe (2) munie d'un ensemble selon une ou plusieurs des revendications 1-3.

7. Structure d'un tuyau selon la revendication 6, destiné à la décharge de fumées et à la fourniture d'air de combustion à un brûleur.
